# EUROPÄISCHE PATENTSCHRIFT

(11) **EP 1 497 064 B1**
(45) Veröffentlichungstag und Bekanntmachung des Hinweises auf die Patenterteilung: **05.01.2011**
(21) Anmeldenummer: 03720244.7
(22) Anmeldetag: 27.03.2003
(51) Int. Cl.: B23B 51/10

(54) **ENTGRATWERKZEUG ZUM INNEN- UND/ODER AUSSENENTGRATEN**
DEBURRING TOOL FOR DEBURRING ON THE INTERIOR AND/OR EXTERIOR
OUTIL D'EBARBAGE DESTINE A L'EBARBAGE INTERIEUR ET/OU EXTERIEUR

(30) Priorität: 05.04.2002 DE 10215004; 17.12.2002 DE 10258914; 17.12.2002 DE 10258915; 12.02.2003 DE 10305676; 12.02.2003 DE 10305705; 12.02.2003 DE 10305727; 10.03.2003 DE 10310270
(43) Veröffentlichungstag der Anmeldung: 19.01.2005
(73) Patentinhaber: Beier Entgrattechnik spezial - Entgrat Werkzeuge, 15345 Atlandsberg (DE)
(72) Erfinder: BEIER, Hans-Michael, 15345 Altlandsberg (DE)
(86) Internationale Anmeldenummer: PCT/DE2003/001010
(87) Internationale Veröffentlichungsnummer: WO 2003/084702

(56) Entgegenhaltungen:
- DE-A- 19 951 980
- DATABASE WPI Section PQ, Week 198412 Derwent Publications Ltd., London, GB; Class P54, AN 1984-073435 XP002247355 & SU 1 020 192 A (SEMAKIN K V), 30. Mai 1983 (1983-05-30)

## Beschreibung

Die Erfindung betrifft ein Entgratwerkzeug zum Innen- und/ oder Außenentgraten von Werkstücken, wie beispielsweise von Stoßkanten an sich kreuzenden Bohrungen oder an Längs- und Quernuten in Bohrungen oder an Querbohrungen in einer Tieflochbohrung mit unterschiedlichen Durchmessern eines Motorblocks oder von Flächen eines Zahn- und Kettenrades sowie hierzu ein zugehöriges Verfahren. Das Entgratwerkzeug wird beim Einsatz rotatorisch und/oder translatorisch bewegt, hat einen Werkzeugschaft, der ein Einspannende und ein Ende mit einem innenliegenden Stützkörper und mindestens einem in einem Durchbruch beweglich angeordneten Schneidenkörper mit Schneide aufweist.

Aus dem Stand der Technik ist durch DE 43 07 084 C2 ein Entgratwerkzeug zum Entgraten von Stoßkanten in Bohrungen bekannt. Kennzeichnend ist, dass die Schneide durch einen in der zentralen Ausnehmung sitzenden, aus einem Elastomerwerkstoff bestehenden Stützkörper mit einer radial aufgebrachten Federkraft beaufschlagt wird, wobei der in einem Durchbruch beweglich geführte Schneidenkörper mit einer Stützfläche versehen ist, mit der er am Stützkörper abgestützt ist. Bei Überschreitung einer bestimmten Beaufschlagungskraft gibt die Schneide federnd nach. Es ist auch möglich, den Stützkörper mit einer Vorspannung in der Ausnehmung aufzunehmen. Durch die Abstützung auf dem Stützkörper werden Bewegungen des Schneidenkörpers zugelassen, die ein wirksames Entgraten auch von im Raum liegenden Stoßkanten ermöglichen sollen. Für das Entgratwerkzeug ist eine kombinierte radiale und axiale Führung vorgesehen. Die axiale Komponente soll den Einführungsvorgang in die Bohrungen eines Werkstücks erleichtern und durch Formgestaltung der entsprechenden Stützfläche des Durchbruchs wird die axiale Bewegung des Entgratwerkzeugs in eine radiale Bewegung des Schneidenkörpers umgesetzt. Weiterhin ist der Stützkörper durch Festlegung der Form, des Werkstoffs und der Werkstoffqualität an die Anwendungserfordernisse anpassbar, um die erforderlichen Bewegungen ausführen zu können. Der Stützkörper hat die Form einer Pyramide, eines Pyramidenstumpfes, eines Kegels, eines Kegelstumpfes, eines Prismas, einer Kugel oder eines Zylinders. Die erforderlichen Bewegungen sind aber auch durch eine Kombination der Form des Stützkörpers mit der der Ausnehmung umsetzbar. Vorzugsweise kann die Ausnehmung als kegelstumpf-, prisma- oder zylinderförmige Ausnehmung gestaltet sein. Derartige Formen sind ebenfalls für die Gestaltung des Durchbruchs vorgesehen. Eine Bewegungsbegrenzung des Schneidenkörpers gegen radiale Verlagerung nach außen soll erreicht werden, in dem der Schneidenkörper mit einem sogenannten Fuß versehen ist, mit dem er sich an den seitlich des Durchbruchs angebrachten Teilen der Innenfläche der Ausnehmung abstützt. Der entscheidende Nachteil des in DE 43 07 084 C2 dargestellten Entgratwerkzeuges besteht darin, dass bei Eintritt des Entgratwerkzeuges in die Bohrung die Schneide(n) mit der durch den Stützkörper beaufschlagten Federkraft an der Bohrungswand anliegen und somit nicht messbare, lichtoptisch sichtbare Spuren erzeugen. Diese sind beispielsweise bei geriebenen Bohrungen im Motorblock unerwünscht. Nachteilig ist auch der stets notwendige Austausch des Stützkörpers bei Änderung des zu bearbeitenden Werkstoffs des Werkstücks. Dieser notwendige Stützkörperaustausch ist insbesondere bei kleineren Werkzeugdurchmessern, z.B. bei einem Durchmesser von 2 mm, äußerst schwierig zu handhaben.

Alle bekannten Entgratwerkzeuge haben zu dem den Nachteil, dass sie sich den während der Bearbeitung ändernden Bedingungen der Gratabmessungen, die vom zunehmenden Verschleiss der graterzeugenden Werkzeuge verursacht werden, nicht anpassen können. Bei einem unbenutzten Werkzeug, also bei Standanfang, ist der während der Bearbeitung eines Werkstücks entstehende Grat noch gering. Dieser kann sich aber zum Standende des Werkzeuges um das 10-fache vergrößern. Die Dimensionierung der bekannten Entgratwerkzeuge erfolgt derzeitig immer auf Gratabmessungen zum Standende, wodurch stetig unterschiedliche Fasen an den zu entgratenden Teilen des Werkstücks entstehen. Bedeutsam ist weiterhin, dass die bekannten Entgratwerkzeuge oft nur für das Entgraten eines Werkstücks oder von Teilen eines Werkstücks, wie für das Innenentgraten von Stoßkanten in Bohrungen oder an Querbohrungen eines Werkstücks, eingesetzt werden können. Nachteilig ist, dass diese Entgratwerkzeuge oftmals einen hohen Herstellungsaufwand erfordern und keine kurzen, den modernen Taktstraßen entsprechende Entgratzeiten erreichen.

Es ist derzeitig auch kein Entgratwerkzeug oder -system bekannt, das universell zum Entgraten von Werkstücken, wie beispielsweise von Stoßkanten an sich kreuzenden Bohrungen oder an Längs- und Quernuten in Bohrungen oder an Querbohrungen in einer Tieflochbohrung mit unterschiedlichen Durchmessern eines Motorblocks oder von Flächen eines Zahn- und Kettenrades, einsetzbar ist.

Deshalb besteht das Problem der Erfindung darin, ein Entgratwerkzeug zum Innen- und/oder Außenentgraten von Werkstücken der eingangs genannten Art zu schaffen, das die Schneidenkräfte den sich während der Bearbeitung ändernden Gratabmessungen und den unterschiedlichen Werkstoffen anpasst, mit einem geringen Aufwand herzustellen ist, bei kleineren Werkzeugdurchmessern eine einfache Handhabung ermöglicht sowie ein technisch sicheres Entgraten von Werkstücken unterschiedlicher geometrischer Form und Größe in guter Qualität und in kurzen, den modernen Taktstraßen entsprechenden Taktzeiten garantiert.
Zur Lösung des vorhandenen Problems ist das Entgratwerkzeug durch die Merkmale des unabhängigen Anspruchs 1 weitergebildet. Das Spiel des an der Oberfläche des Stützkörpers beweglich gelagerten Schneidenkörpers ist so bestimmt, dass bei einem Druck p = 0 bar die Schneide(n) nicht nach innen fallen. Dies bedeutet, dass die Schneide(n) im rohrförmigen Schaftstück sicher geführt sind und nicht mit einer Kraft F größer Null Newton an der Bohrungsoberfläche anliegen. Eine exakte Schneidenführung ist gegeben, in dem der Schneidenkörper ein Schneidenmittelstück mit einer Schneide, eine radiale, seitliche Schneidenwegbegrenzung bzw. eine radiale, stirnseitige Schneidenwegbegrenzung oder eine zylindrische Schneidenwegbegrenzung hat. Vorteilhafterweise entstehen damit bei Eintritt des Entgratwerkzeuges in die Bohrung durch die Schneide(n) keine sichtbaren Spuren an der Bohrungswand. Durch die unterschiedliche Gestaltung der Oberfläche des Stützkörpers und des Schneidenkörpers in der Form und den Abmessungen ist stets eine Flächendifferenz vorhanden, die immer eine Bewegung der Schneide(n) nach außen in Abhängigkeit vom Druck bewirkt. Die Oberfläche des Stützkörpers und des Schneidenkörpers kann rechteckig, dreieckig, zylindrisch oder prismatisch sein, wobei die Flächen zur Längsachse des Werkzeugschaftes sowohl parallel als auch nicht parallel angeordnet sein können. Weiterhin ist der im Durchbruch des rohrförmigen Schaftstückes gelagerte Schneidenkörper so dimensioniert, dass während des Entgratens nur ein minimaler Druckabfall entsteht, aber während des Ein- und Ausfahrens des Entgratwerkzeuges ein größerer Druckabfall gesichert ist. Der mit einem Druck in die Durchgangsbohrung des Werkzeugschaftes gepresste flüssige oder gasförmige oder aus einem Gas-Flüssigkeits-Gemisch bestehende Stoff bewegt die Schneide(n) nach außen. Dabei sollte der Druck p an der Schneidenkörperfläche stets größer als der Atmosphärendruck und kleiner 500 bar, vorzugsweise zwischen 4 bis 60 bar, sein. Als flüssige Stoffe sind Bohremulsionen, Bohröle oder ein Gemisch oder andere zur Kühlung und/oder Schmierung einsetzbare Stoffe geeignet. Die Zuführung erfolgt über die an den Werkzeugmaschinen vorhandenen hohlen Arbeitsspindeln, aber auch über einen separaten Anschluss am Support oder an der Werkzeugmaschine. Als gasförmige Stoffe sind Gase, wie Schweißgase, Inertgase, Druckluft oder Kohlenmonoxid einsetzbar. Die Zuführung eines Gas-Flüssigkeits-Gemisches, wie beispielsweise Luft mit einem 10 bis 15 prozentigen Anteil eines zugemischten Bohröles ist ebenfalls möglich. Zum Entgraten von beispielsweise Stoßkanten an einer Querbohrung in einem Motorblock ist vor dem Einführen des Entgratwerkzeuges in die Bohrung ein Druck p von 3 bar an der Werkzeugmaschinensteuerung zu programmieren. Fährt das Werkzeug in die Bohrung, so werden die außerhalb des Werkzeugschaftes liegenden Schneiden nach innen bewegt. Damit werden Teilbereiche des Durchbruches frei und der in die Durchgangsbohrung des Entgratwerkzeuges gepresste flüssige oder gasförmige Stoff kann abfließen. Tritt die Schneide in die Querbohrung ein, bewegt sich diese durch den anliegenden Druck, welcher durch die vorhandene Flächendifferenz zwischen Stützkörper und Schneidenkörper entsteht, nach außen. Jetzt liegt eine bestimmte Kraft an, die zum Entgraten nutzbar ist. Eine gezieltere Zuführung des in die Durchgangsbohrung des Werkzeugschaftes gepressten Stoffes ist beim Entgraten kleiner Bohrungsdurchmesser von bis zu 4,5 mm dadurch möglich, wenn das rohrförmige Schaftstück des Entgratwerkzeuges durch einen quer zur Längsachse durch die Durchgangsbohrung angeordneten Innenspanngewindestift mit dem Werkzeugschaft verbunden ist, wobei der Kerndurchmesser D1 des Innenspanngewindestiftes kleiner als der Durchmesser D3 der Durchgangsbohrung ist und dessen Durchmesser D gleich dem Durchmesser der Durchgangsbohrung entspricht. Hinzu kommt, dass der Innenspanngewindestift im Bereich der Durchgangsbohrung eine Nut hat und sein schaftstückseitiges Ende kegelförmig mit einem Winkel α von < 10 Grad ausgeführt ist. Der Druck p kann auch vorteilhafterweise in Abhängigkeit vom Werkstoff und der gebohrten Menge mit durch den Verschleiss des Bohrers zunehmend entstehenden Gratabmessungen programmiert erhöht werden. Es ist ebenfalls möglich, drucklos bis zur Gratbasis der zu entgratenden Querbohrung heranzufahren. Das erfindungsgemäße Entgratwerkzeug ist trotz kleiner Werkzeugdurchmesser einfach zu handhaben, da u.a. kein Austausch der funktionsbedingten Teile notwendig ist. Weiterhin haben Erprobungen ergeben, dass das Entgratwerkzeug zum Entgraten von unebenen Bohrungsaustritten anwendbar ist. Dies bedeutet, dass beispielsweise die radiale Ebene oder Teile dieser Ebene an der Stelle des Werkzeugaustritts geneigt sind. Problematisch ist derzeitig aber dennoch das Entgraten von Stoßkanten an größeren Querbohrungen mit einem Durchmesser ab 3 mm, weil bei einer Vorschub-/Schnittgeschwindigkeitserhöhung keine Produktivitätserhöhungen möglich sind und die Qualität des Entgratergebnisses sich verschlechtert. Feststellbar ist, dass die im rohrförmigen Schaftstück an den Schneidenkörpern angeordneten Schneiden, welche über den Umfang des Schaftstückes verteilt in den Durchbrüchen liegen, nicht vollständig im Eingriff stehen. Weiterhin sind die Schneiden des Entgratwerkzeuges in axialer Richtung in einer Ebene angeordnet. Die vorgeschlagene Ausführungsform des Entgratwerkzeuges ist von mindestens zwei eng nebeneinander liegenden, radialsymmetrisch und in axialer Richtung um einen Betrag m versetzt im rohrförmigen Schaftstück angeordneten Durchbrüchen gekennzeichnet. Die Durchbrüche im rohrförmigen Schaftstück sind auch asymmetrisch anordbar. Der Betrag m ist immer kleiner als der Vorschub der Schneide. Vorteilhafterweise sind größere Querbohrungen in guter Qualität und in einer extrem kurzen Zeit zu entgraten, da jetzt mehr Schneiden im direkten Eingriff stehen. Die Drehzahl des Entgratwerkzeuges kann bei gleichen Druckverhältnissen auf > 2000 U/min erhöht werden. Damit sind die Voraussetzungen für den Einsatz des Entgratwerkzeuges in Taktstraßen mit neuesten Fertigungstechnologien gegeben.
Durch eine weitere Ausführungsform des erfindungsgemäßen Entgratwerkzeuges können jetzt Stoßkanten an sich kreuzenden

Bohrungen mit unterschiedlichen Durchmessern in einer Tieflochbohrung gleichzeitig entgratet werden, wodurch die Bereitstellung zusätzlicher Entgratwerkzeuge entfällt. Hierzu ist das rohrförmige Schaftstück des Entgratwerkzeuges mit der zentrisch angeordneten Durchgangsbohrung, welches am Ende eine Entgrateinheit hat, abgestuft mit einem kleineren Durchmesser und einer weiteren Entgrateinheit zu verlängern. Je nach Anforderung kann das rohrförmige Schaftstück im Durchmesser mehrfach abgestuft sein, und nach jeder Abstufung ist eine konstruktiv gleich aufgebaute Entgrateinheit angeordnet.

Letztendlich besteht die Möglichkeit, dass das erfindungsgemäße Entgratwerkzeug zum spanenden Außenentgraten von Flächen eines Zahn- und Kettenrades eingesetzt wird. Hierfür wird ein entsprechendes Arbeitsverfahren offenbart, wodurch die Voraussetzungen zum Entgraten von Zahn- und Kettenrädern in modernen Taktstraßen geschaffen werden. Erreicht wird dies dadurch, dass das Entgratwerkzeug nach einer zum Werkstück erfolgten Zustellbewegung mit einem Druck von > 3 bar in radialer Richtung f₁ und in axialer Richtung f₂ gesteuert der zu bearbeitenden Form des Werkstücks und/oder linear zum Werkstück mit einem Vorschub nachgeführt wird und gleichzeitig das Werkstück mit einer Drehzahl von > 100 U/min im Rechts- und/oder Linkslauf bewegt wird. Kennzeichnend ist ebenfalls, dass der Vorschub je Umdrehung des Werkstücks 0,01 bis 0,3 mm, vorzugsweise 0,05 bis 0,2 mm, beträgt. Der gleichzeitige Einsatz mehrerer Entgratwerkzeuge hierfür ist möglich.

Die Erfindung soll an Ausführungsbeispielen näher erläutert werden. Hierzu zeigen die zugehörigen Zeichnungen in
- Figur 1:: ein erfindungsgemäßes Entgratwerkzeug im Schnitt
- Figur 2:: eine weitere Ausführungsform des Entgratwerk- zeuges im Schnitt
- Figur 3:: eine andere Ausführung des Vorentgraters im Schnitt
- Figur 4:: eine radiale, seitliche Schneidenlagerung im Schnitt
- Figur 5:: verschiedene Lagerausführungen des auf dem Stützkörper aufliegenden Schneidenkörpers im Schnitt A-A von Figur 4
- Figur 6:: stirnseitige Schneidenausführungen im Schnitt B-B von Figur 4
- Figur 7:: eine Draufsicht von Figur 6
- Figur 8:: eine Seitenansicht von Figur 6
- Figur 9:: eine andere Ausführungsform des Entgratwerkzeu- ges im Längsschnitt
- Figur 10:: runde Schneidenaufnahmen mit verschiedenen Aus- führungen der Schneide und der Schulter in der Seiten- und Draufsicht
- Figur 11:: eine andere Verbindung des Schaftstückes mit dem Werkzeugschaft im Schnitt
- Figur 12:: eine Ausführung des Innenspanngewindestiftes von Figur 11
- Figur 13:: die neue Verbindung des Schaftstückes mit dem Werkzeugschaft im Schnitt
- Figur 14:: eine andere Ausführungsform des schaftstücksei- tigen Endes des Innenspanngewindestiftes von Figur 13 im Längsschnitt und
- Figur 15:: den Innenspanngewindestift von Figur 13 im Längsschnitt
- Figur 16:: eine Bohrung mit zwei unterschiedlichen Durchmessern und zwei Querbohrungen in einem Werkstück
- Figur 17:: ein entsprechendes Entgratwerkzeug
- Figur 18:: ein zugestelltes Entgratwerkzeug zum Außen- entgraten eines Zahnrades im Schnitt
- Figur 19:: ein zugestelltes Entgratwerkzeug zum Außen- entgraten eines Kettenrades im Schnitt
- Figur 20:: ein rohrförmiges Schaftstück mit drei Durch- brüchen in der Draufsicht und das rohrförmige Schaftstück im Schnitt C-C

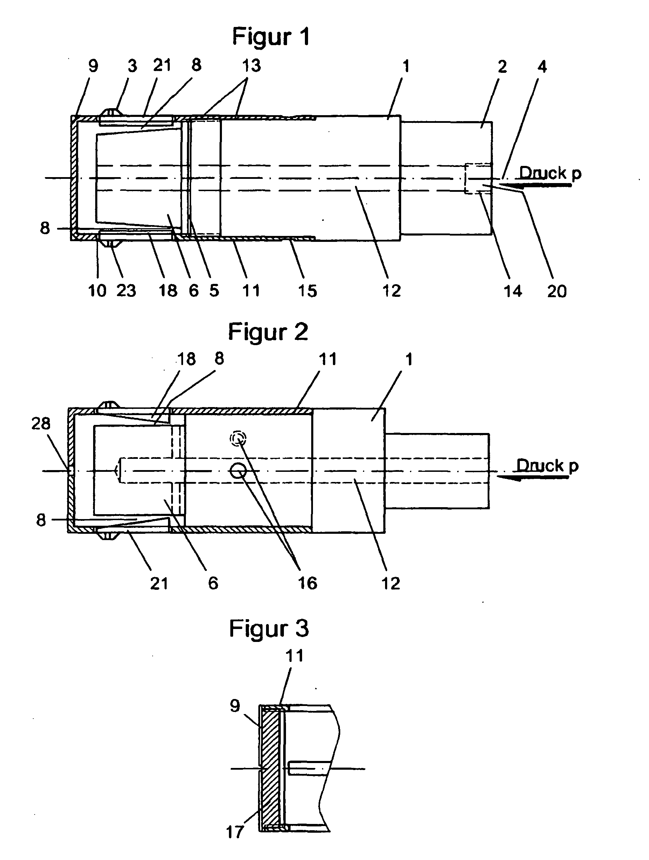

In **Figur 1** ist ein erfindungsgemäßes Entgratwerkzeug im Längsschnitt dargestellt. Erkennbar ist, dass ein kegelförmiger Stützkörper 6 am werkzeugseitigen Schaftende 5 als festes Lager angeordnet ist. Ein rohrförmiges Schaftstück 11, das durch ein Verbindungselement 13, beispielsweise einen Gewindezapfen und eine Führung, mit dem Werkzeugschaft 1 verbunden ist, hält zwei im Durchbruch 10 beweglich gelagerte rechteckige Schneidenkörper 21 mit einer radialen, seitlichen Schneidenwegbegrenzung 18, die lose mit einem Lagerspiel 8 von mindestens 0,05 mm an der Oberfläche des Stützkörpers 6 anliegen. An der Stirnseite des rohrförmigen Schaftstückes 11 sind mehrere Nuten als Vorentgrater 9 angeordnet. Der Vorentgrater 9 wird beim Entgraten von Werkstoffen mit einem hohen Dehnungsvermögen, wie z. B. Stahl, benutzt. Hier sind die Nuten im Winkel von 45 Grad ausgeführt, 0,5 mm tief und mindestens 0,8 mm breit. Der Vorentgrater 9 kann auch eine hohle Schraube mit Schlitzen sein. Wird nun über den Stoffanschluss 14, welcher als Gewinde oder Kernloch ausgeführt sein kann, ein Bohröl mit einem Druck p in die Durchgangsbohrung 12 eingespeist, so baut sich an den Schneidenkörpern 21 ein Druck auf, der die mit einer Schulter 23 gestalteten Schneide(n) 3 nach außen bewegt. Die Durchgangsbohrung 12 ist zentrisch in der Längsachse 4 im Werkzeugschaft 1 bis zum Ende des Stützkörpers 6 angeordnet. Sie könnte aber auch asymmetrisch angeordnet sein. Wird der Druck p auf Null bar reduziert, bewegen sich die Schneiden 3 zur Oberfläche des Stützkörpers 6. Die meisten Werkzeugmaschinen haben über ihre Arbeitsspindeln eine Kühl- und Schmiermittelzuführung, die durch eine CNC-Steuerung programmierbar ist. Die Anordnung des Entgratwerkzeuges in einer Arbeitsspindel mit Stoffzufuhr ermöglicht die Steuerung des Druckes p in Abhängigkeit von Weg und Zeit. Damit sind die Schneidenkräfte des Entgratwerkzeuges über den Druck variabel einstellbar, so dass mit dem erfindungsgemäßen Entgratwerkzeug unterschiedliche Werkstoffe problemlos entgratbar sind. Auch sind durch die zeitlich gesteuerten Druckerhöhungen zunehmende Gratabmessungen, die durch den Werkzeugverschleiss hervorgerufen werden, beherrschbar. Hinzu kommt, dass eine Kombination mit graterfassenden Messmitteln erfolgen kann. Am maschinenseitigen Einspannende 2 des Werkzeugschaftes 1 ist ein Stoffanschluss 14 und ein Adapter 20 zur bedarfsgerechten Verlängerung des Werkzeugschaftes 1 angeordnet. Zur schnellen und einfachen Montage des Entgratwerkzeuges hat das rohrförmige Schaftstück 11 eine Schlüsselweite 15.
**Figur 2** zeigt eine weitere Ausführung des Entgratwerkzeuges im Schnitt, wobei an einem zylindrischen Stützkörper 6 zwei kegelig ausgeführte Schneidenkörper 21 mit einem Lagerspiel 8 anliegen und so eine radiale, seitliche Schneidenwegbegrenzung 18 gewährleisten. Das rohrförmige Schaftstück 11 ist hier durch beispielsweise Spannstifte 16 mit dem Werkzeugschaft 1 verbunden. In der Stirnseite des Schaftstückes 11 ist eine Blende 28 in Form einer Durchgangsbohrung angeordnet, die einen Abbau des Druckes im Entgratwerkzeug ermöglicht und zusätzlich zum Reinigen der Bohrungsoberfläche sowie zum Wegblasen von Öl und/oder Späne nutzbar ist. Eine Druckminderung ist auch dadurch möglich, wenn die Durchgangsbohrung 12 im Werkzeugschaft 1 eine Grundlochbohrung mit radialer Abführung hat. Ansonsten hat diese Ausführungsform im Vergleich zu dem in Figur 1 dargestellten Entgratwerkzeug keine weiteren Abweichungen.
**Figur 3** zeigt eine andere Ausführung des Vorentgraters 9 im Schnitt. Es ist dargestellt, dass an der Stirnseite des rohrförmigen Schaftstückes 11 ein mit mehreren Nuten versehendes Verschlussplättchen 17 angeordnet ist.

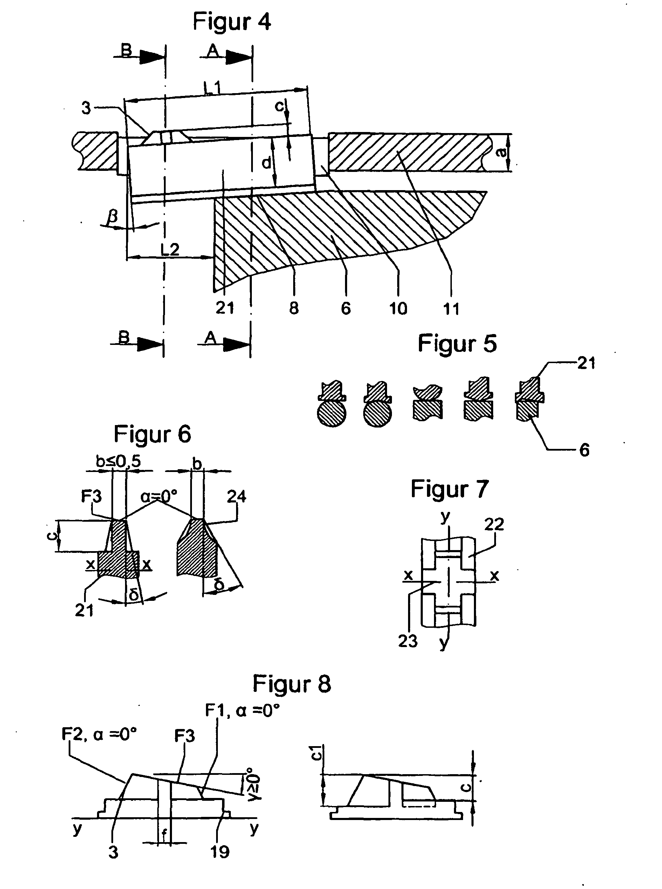

**Figur 4** zeigt eine radiale, seitliche Schneidenlagerung im Schnitt und im drucklosen Zustand, bei dem das Lagerspiel 8 gleich Null ist. Die Oberfläche des Stützkörpers 6 und die Oberfläche des rechteckigen Schneidenkörpers 21 liegen direkt lose aneinander. Erkennbar ist auch, dass das rohrförmige Schaftstück 11 den im Durchbruch 10 beweglich gelagerten Schneidenkörper 21 mit der Schneide 3 aufnimmt. Zur Gewährleistung der Funktionsfähigkeit des Entgratwerkzeuges ist von Bedeutung, dass die doppelte Länge L2 der Auskragung des Schneidenkörpers 21 zum Stützkörper 6 kleiner bzw. gleich der Länge L1 des Schneidenkörpers 21 ist, die Stärke d des Schneidenkörpers 21 kleiner als die Wandstärke a des rohrförmigen Schaftstückes 11 ist und die Stärke d des Schneidenkörpers 21 größer als die Schneidenhöhe c ist. Bei Nichteinhaltung dieser konstruktiven Merkmale für die radiale, seitliche Schneidenlagerung kippen die Schneide(n) 3 nach innen weg. Das Entgratwerkzeug ist nicht einsetzbar.
**Figur 5** zeigt verschiedene Lagerausführungen des auf dem Stützkörper 6 aufliegenden Schneidenkörpers 21 im Schnitt A-A von Figur 4. Die Lagerausführungen lassen das Erfordernis einer Flächendifferenz der Oberflächen des Stützkörpers 6 und des Schneidenkörpers 21 erkennen, die bei einem Druck p die Bewegung der Schneide(n) garantieren.
**Figur 6** zeigt zwei stirnseitige Schneidenausführungen im Schnitt B-B von Figur 4. Der Schneidenkörper 21 hat eine Schneide 3 mit einer Schneidenhöhe c und einer Schneidenbreite b von kleiner als 0,5 mm. Dargestellt ist ebenfalls die Schulterhöhe 24, die kleiner oder gleich der Schneidenhöhe c ist. Der Schulterwinkel δ ist besonders für kleinere Querbohrungen mit einem Durchmesser von kleiner 2 mm bedeutsam. Vorteilhafterweise sollte der Schulterwinkel δ auf 5 bis 45 Grad reduziert werden. Er kann bei größeren Querbohrungen auch größer als 45 Grad sein. Somit ist ein ungehindertes Entgraten der Querbohrungen möglich.
**Figur 7** zeigt eine Draufsicht von Figur 6 mit einer Schulter 23 und einer Aussparung 22, die unterschiedlich in der Tiefe C1 ausgeführt sein kann. Damit ist eine kürzere Bewegungszeit der Schneide unter Druck erreichbar bzw. die Schneide bewegt sich von selbst in die Ausgangsstellung. Die Schulter 23 nimmt die seitlich wirkenden Schneiden- und Reibkräfte auf, wodurch Schneidenbrüche vermieden werden.

**Figur 8** zeigt eine Seitenansicht von Figur 6. Die Flächen F1, F2, F3 der Schneide 3 bestimmen den Freiwinkel α von Null Grad. Dieser ist insbesondere für ein wirksames Entgraten von Querbohrungen günstig, wobei das Entgratwerkzeug beim Vorschub im Rechtslauf und beim Rücklauf im Linkslauf geführt ist. Alle bekannten Entgratwerkzeuge haben an den aktiven Schneiden einen Freiwinkel α von größer Null Grad und können dadurch nur in eine Richtung entgraten. Der häufig beim Entgratvorgang neu entstehende Grat kann nicht im gleichen Arbeitsgang beseitigt werden. Das erfindungsgemäße Entgratwerkzeug kann im Rücklauf den u.U. entstehenden neuen Grat (Sekundärgrat) beseitigen. Ebenfalls ist die Schneide 3 mit einer radialen, stirnseitigen Schneidenwegbegrenzung 19 versehen. Der Kippwinkel γ der Schneide 3 von größer Null Grad verhindert während des Entgratvorganges Beschädigungen an den Werkstückoberflächen, wie beispielsweise an der Bohrungswand. Die Breite f der Schulter 23 verhindert den Bruch der Schneide 3.

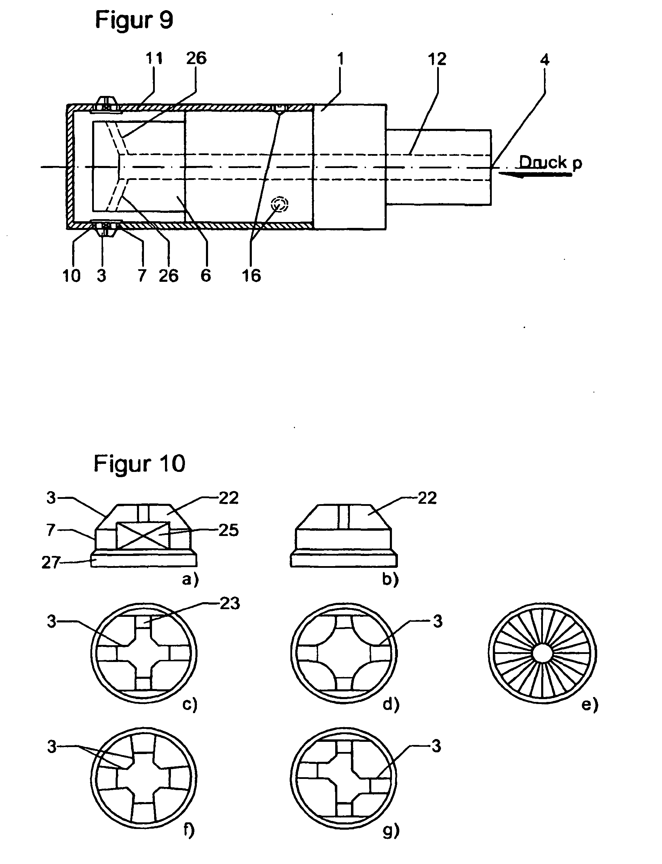

**Figur 9** zeigt eine andere Ausführungsform des Entgratwerkzeuges im Längsschnitt. Hier ist der Werkzeugschaft 1 mit dem rohrförmigen Schaftstück 11 durch drei am Umfang des Schaftstückes 11 um 60 Grad versetzte Gewindestifte 16 verbunden. Die Durchgangsbohrung 12 ist zentrisch in der Längsachse 4 im Werkzeugschaft 1 bis zur Hälfte des zylindrischen Stützkörpers 6 angeordnet. Vom Ende der im Stützkörper 6 liegenden Durchgangsbohrung 12 führen zwei Bohrungen 26 direkt in die Richtung der Schneiden 3. Das Schneidenmittelstück 7 hält die Schneide 3, ist rund oder mit zwei seitlich angeordneten Flächen ausgeführt und im Durchbruch 10 des Schaftstückes 11 beweglich gelagert.
**Figur 10** zeigt mehrere runde Schneidenaufnahmen mit verschiedenen Ausführungen der Schneide 3 und der Schulter 23 in der Seiten- und Draufsicht. Die Ausführungen in a) und b) sind in der Seitenansicht ausgeführt, wobei in a) eine zylindrische Schneidenwegbegrenzung 27 mit einem Schneidenmittelstück 7 und einer daran direkt angrenzenden Schneide 3 dargestellt ist. Das Schneidenmittelstück 7 hat eine Schlüsselfläche 25 zur Verdrehsicherung. Diese fehlt in b). Die Schneidenaufnahmen in c), d), e), f) und g) sind in der Draufsicht dargestellt. c) zeigt zwei Schneiden 3 und zwei gefräste Schultern 23 und in d) sind zwei Schneiden 3 und zwei gebohrte Schultern dargestellt. Zum Entgraten von Bohrungen in Gussteilen ist die in e) dargestellte Schneidenaufnahme, die mit Kerbschneiden versehen ist, anwendbar. Die Kerbschneiden können die Gusstoleranzen besser ausgleichen. Die Schneidenaufnahme in f) hat zwei Schneiden 3 und zwei Schultern, wobei die Schneiden und die Schultern in nicht paralleler Ausführung zur Achsmitte hergestellt sind. Bei den Schneidenaufnahmen in e) und f) können die Schulter und die Schneide wechseln, da keine Fixierung über die Schlüsselflächen erfolgt. Es ist damit eine Art Selbstfixierung entsprechend den Bedingungen am Grat gegeben. g) zeigt eine runde Schneidenaufnahme mit asymmetrisch angeordneten Schneiden 3 und Schultern.

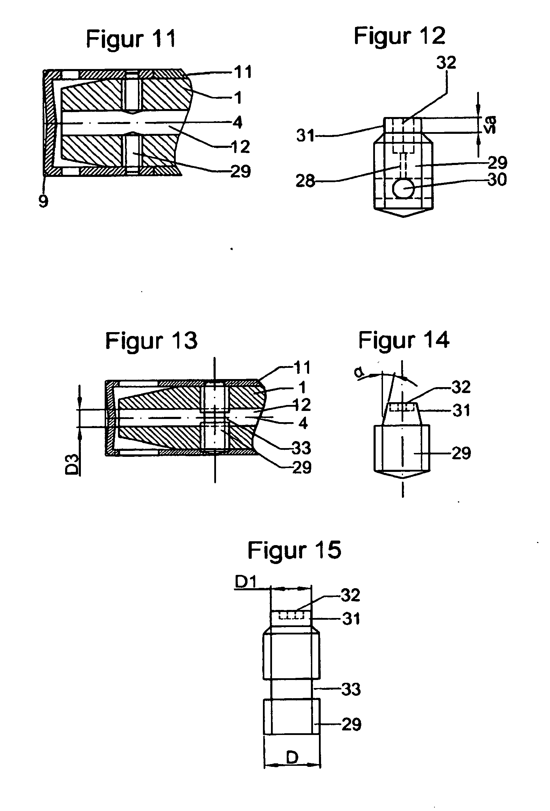

In **Figur 11** ist eine andere Verbindung des rohrförmigen Schaftstückes 11 mit dem Werkzeugschaft 1 im Schnitt dargestellt. Für diese Verbindung ist kennzeichnend, dass mindestens zwei Innenspanngewindestifte 29 quer zur Längsachse 4 durch das Schaftstück 11 und durch den Werkzeugschaft 1 bis in die Durchgangsbohrung 12 geführt sind. Die Innenspanngewindestifte 29 können aber auch nur bis zur Durchgangsbohrung 12 geführt sein. Die Lage der Innenspanngewindestifte 29 bestimmt die Größe des Querschnitts der Durchgangsbohrung 12. Somit kann die Durchflussmenge des in die Durchgangsbohrung 12 gepressten Stoffes und der Druck p an den Schneidenkörperflächen gezielt verändert werden.
**Figur 12** zeigt eine Ausführung des Innenspanngewindestiftes 29 von Figur 11. Das durchgangsbohrungsseitige Ende des Innenspanngewindestiftes 29 hat mindestens eine Querbohrung 30, die einen Durchfluss unter allen Lagebedingungen des Innenspanngewindestiftes 29 sichert und somit auch als Drossel/Blende wirken kann. Zusätzlich kann eine als Drossel/ Blende wirkende Bohrung 28 in der Längsrichtung des Innenspanngewindestiftes 29 angeordnet werden. Damit ist eine Druckminderung in radialer Richtung des Entgratwerkzeuges möglich. Alle bekannten Kühlungs- und Schmierungssysteme für Werkzeugmaschinen sind für hohe Drücke ausgelegt. Eine Regelung in niedrigen Druckbereichen, wie z. B. 3 bar zum Entgraten von Gussteilen aus Aluminium oder aus Gusseisen ist maschinentechnisch nicht möglich. Deshalb hat das Entgratwerkzeug mehrere Möglichkeiten zur Druckminderung, wobei diese je nach Anwendungsfall unterschiedlich genutzt werden können. Das schaftstückseitige Ende 31 ist im Durchmesser kleiner als der Außendurchmesser des Innenspanngewindestiftes 29 und in der Länge kleiner als die Wandstärke a des Schaftstückes 11. Der Übergang vom schaftstückseitigen Ende 31 zum Außendurchmesser des Innenspanngewindestiftes 29 ist vorteilhafterweise kugelig oder kegelförmig gestaltet. Zur besseren Montage und Bedienung ist im schaftstückseigigen Ende beispielsweise ein Innensechskant 32 für einen Schlüssel angeordnet. Der Innensechskant 32 kann durch einen Schlitz oder Kreuzschlitz ersetzt werden.
In **Figur 13** ist die neue Verbindung des Schaftstückes mit dem Werkzeugschaft im Schnitt dargestellt. Sie zeigt, dass das rohrförmige Schaftstück 11 durch einen quer zur Längsachse 4 durch die Durchgangsbohrung 12 angeordneten Innenspanngewindestift 29 mit dem Werkzeugschaft 1 verbunden ist. Der Innenspanngewindestift 29 hat im Bereich der Durchgangsbohrung 12 eine Nut 33.
**Figur 14** zeigt eine andere Ausführungsform des schaftstückseitigen Endes des Innenspanngewindestiftes im Längsschnitt. Das schaftstückseitige Ende 31 des Innenspanngewindestiftes 29 ist kegelförmig ausgeführt, wobei der Winkel a < 10 Grad beträgt. Dadurch werden u. a. Beschädigungen der Bohrungswand vermieden und ein verbesserter Toleranzausgleich des Innenspanngewindestiftes zum im Durchbruch beweglich gelagerten Schneidenkörper erreicht. Zur Montage ist am schaftstückseitigen Ende 31 ein Innensechskant 32 angeordnet.
**Figur 15** zeigt den Innenspanngewindestift von Figur 13 im Längsschnitt. Ein sicheres Entgraten von extrem kleinen Bohrungsdurchmessern, wie beispielsweise von 2,8 mm, ist dadurch möglich, wenn der Durchmesser D3 der Durchgangsbohrung 12 des Werkzeugschaftes 1 größer als der Kerndurchmesser D1 des Innenspanngewindestiftes 29 ist sowie der Durchmesser D3 der Durchgangsbohrung 12 und der Durchmesser D des Innenspanngewindestiftes 29 gleich sind. Damit kann der in die Durchgangsbohrung 12 gepresste Stoff, z. B. Druckluft, uneingeschränkt zu den Schneiden gelangen.

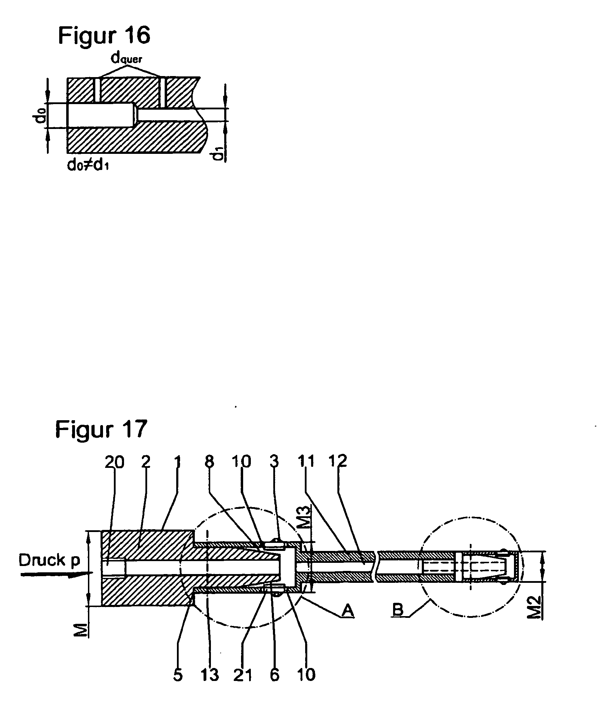

In **Figur 16** ist eine Bohrung mit zwei unterschiedlichen Durchmessern d₀; d₁ und mit zwei Querbohrungen d_{quer} in einem Werkstück dargestellt. Konkret bedeutet dies, dass für das Entgratwerkzeug zwei unterschiedliche Eintrittsdurchmesser zum Entgraten dieser Stoßkanten an den Querbohrungen gegeben sind.
**Figur 17** zeigt ein für Tieflochbohrungen als' Stufenwerkzeug ausgeführtes Entgratwerkzeug mit den Entgrateinheiten A und B zum Entgraten der Stoßkanten an den sich kreuzenden Bohrungen mit den Durchmessern d₀/d_{quer} und d₁/d_{quer} des Werkstücks in Figur 16. Die Entgrateinheit A mit dem Durchmesser M3 entgratet die Stoßkanten an den sich kreuzenden Bohrungen mit den Durchmessern d₀/d_{quer} und die Entgrateinheit B mit dem Durchmesser M2 entgratet die Stoßkanten an den sich kreuzenden Bohrungen mit den Durchmessern d₁/d_{quer}. Beide Entgrateinheiten A;B haben das rohrförmige Schaftstück 11 mit der zentrisch angeordneten Durchgangsbohrung 12 als Basisteil. Dieses kann im Durchmesser M, falls die Notwendigkeit besteht, mehrfach abgestuft sein und nach jeder Abstufung ist eine analoge Entgrateinheit angeordnet.

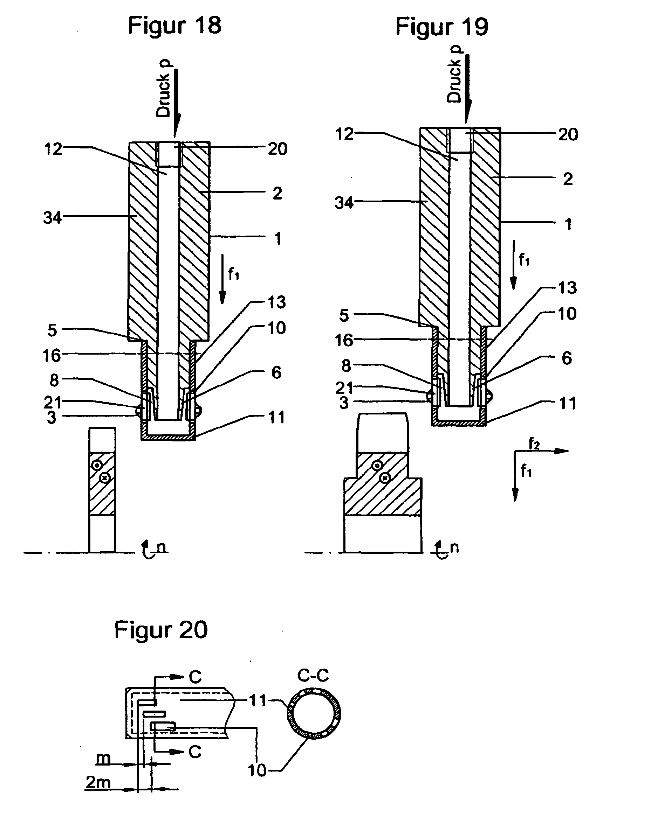

In **Figur 18** ist ein zugestelltes Entgratwerkzeug zum Außenentgraten eines Zahnrades im Schnitt dargestellt. Nach dem das Zahnrad mit einer Drehzahl von 120 U/min im Rechtslauf in Bewegung gesetzt worden ist, wird das Entgratwerkzeug 34 mit einem Druck von 5 bar in radialer Richtung f₁ gesteuert mit einem Vorschub von 0,07 mm je Zahnradumdrehung linear zum Zahnrad geführt. Im Rücklauf wird dann mit der gleichen Zahnradumdrehung im Linkslauf gearbeitet. Dadurch kann eine Zahnkopfhöhe von 4 mm in weniger als 50 Sekunden, unabhängig vom Durchmesser des Zahnrades, entgratet werden.
**Figur 19** zeigt ein zugestelltes Entgratwerkzeug zum Außenentgraten eines Kettenrades im Schnitt. Das Kettenrad dreht sich mit einer Drehzahl von 200 U/min im Rechtslauf. Das Entgratwerkzeug 34 wird mit einem Druck von 4 bar und einem Vorschub in radialer Richtung f₁ und in axialer Richtung f₂ gesteuert der Form des Kettenrades nachgeführt. Der Vorschub ist mit 0,07 mm je Umdrehung des Kettenrades im Vor- und Rücklauf festgelegt worden. Die Zahnhöhe des Kettenrades beträgt 60 mm. Die Entgratzeit für 36 Zähne, einschließlich des Kopf- und Fußkreises, beträgt ca. 45 Sekunden. Das erfindungsgemäße Verfahren ist auch zum gleichzeitigen Außenentgraten mehrerer Kettenräder durchführbar, wenn zwei Entgratwerkzeuge 34 versetzt angeordnet werden. So können mehrere Zahnflanken gleichzeitig bei einer weiteren Reduzierung der Entgratzeit entgratet werden.
Das in **Figur 20** in der Draufsicht dargestellte rohrförmige Schaftstück 11 zeigt drei in axialer Richtung um den Betrag m von 0,1 mm versetzt angeordnete Durchbrüche 10. Im Schnitt C-C des röhrförmigen Schaftstückes 11 ist weiterhin erkennbar, dass insgesamt sechs Durchbrüche 10, wobei jeweils drei eng nebeneinander und gegenüberliegende Durchbrüche im rohrförmigen Schaftstück 11 radialsymmetrisch angeordnet sind. Die Durchbrüche 10 nehmen die nicht dargestellten Schneidenkörper mit Schneide auf. Eine derartige Anordnung der Durchbrüche 10 bewirkt, dass drei Schneiden im direkten Eingriff und drei Schneiden im indirekten Eingriff stehen. Der axiale Versatz um den Betrag m führt dazu, dass der Gesamtvorschub pro Umdrehung des Entgratwerkzeuges bis auf 0,6 mm erhöht werden kann.

### Bezugszeichenliste

- 1: Werkzeugschaft
- 2: Einspannende
- 3: Schneide
- 4: Längsachse
- 5: werkzeugseitiges Schaftende
- 6: Stützkörper
- 7: Schneidenmittelstück, zylindrisch
- 8: Lagerspiel
- 9: Vorentgrater
- 10: Durchbruch
- 11: röhrförmiges Schaftstück
- 12: Durchgangsbohrung
- 13: Verbindungselement (Gewindezapfen und Führung)
- 14: Stoffanschluss
- 15: Schlüsselweite
- 16: Verbindungselement (Gewindestift, Stift, Spannstift)
- 17: Verschlussplättchen
- 18: radiale, seitliche Schneidenwegbegrenzung
- 19: radiale, stirnseitige Schneidenwegbegrenzung
- 20: Adapter
- 21: Schneidenkörper
- 22: Aussparung
- 23: Schulter
- 24: Schulterhöhe
- 25: Schlüsselfläche
- 26: Bohrung
- 27: zylindrische Schneidenwegbegrenzung
- 28: Blende / Drossel
- 29: Innenspanngewindestift
- 30: Querbohrung
- 31: schaftstückseitiges Ende
- 32: Innensechskant
- 33: Nut
- 34: Entgratwerkzeug als Einheit
- a: Wandstärke des Schaftstückes 11
- b: Schneidenbreite
- c: Schneidenhöhe
- C1: Senktiefe
- d: Stärke des Schneidenkörpers 21
- f: Breite der Schulter 23
- L1: Länge des Schneidenkörpers 21
- L2: Länge der Auskragung des Schneiden- zum Stützkörper
- F1: Fläche der Schneide 3
- F2: Fläche der Schneide 3
- F3: Fläche der Schneide 3
- A: Entgrateinheit
- B: Entgrateinheit
- M: Durchmesser, allgemein des Schaftstückes 11
- M2: kleinerer Durchmesser des Schaftstückes 11
- M3: größerer Durchmesser des Schaftstückes 11
- D: Durchmesser des Innenspanngewindestiftes 29
- D1: Kerndurchmesser des Innenspanngewindestiftes 29
- D3: Durchmesser der Durchgangsbohrung 12
- f₁: Vorschub in radialer Richtung
- f₂: Vorschub in axialer Richtung

## Patentansprüche

1. Entgratwerkzeug zum Innen- und/oder Außenentgraten von Werkstücken, wie beispielsweise von Stoßkanten an sich kreuzenden Bohrungen oder an Längs- und Quernuten in Bohrungen oder an Querbohrungen in einer Tieflochbohrung mit unterschiedlichen Durchmessern eines Motorblocks oder von Flächen eines Zahn- und Kettenrades, welches beim Einsatz rotatorisch und/oder translatorisch bewegt wird, mit einem Werkzeugschaft (1), der ein Einspannende (2) und ein Ende (5) mit einem innenliegenden, aus einem Elastomerwerkstoff bestehenden Stützkörper (6) hat, der mindestens eine Stützfläche eines in einem Durchbruch (10) beweglich angeordneten Schneidenkörpers (21) mit einer Schneide (3) abstützt und die Schneide (3) mit einer Federkraft radial beaufschlagt, **dadurch gekennzeichnet, dass**
- der Stützkörper (6) am werkzeugseitigen Schaftende (5) als festes Lager angeordnet ist,
- ein rohrförmiges Schaftstück (11), das durch ein oder mehrere Verbindungselemente (13) mit dem Werkzeugschaft (1) verbunden ist, den im Durchbruch (10) beweglich gelagerten Schneidenkörper (21) hält, welcher lose mit einem Spiel (8) an der Oberfläche des Stützkörpers (6), die in Form und Abmessungen von der Oberfläche des Schneidenkörpers (21) stets geometrisch unterschiedlich ist, aufliegt und
- ein unter Druck in eine Durchgangsbohrung (12) des Werkzeugschaftes (1) gepresster flüssiger oder gasförmiger oder aus einem Gas-Flüssigkeits-Gemisch bestehender Stoff die Schneide (3) nach außen bewegt.

2. Entgratwerkzeug nach Anspruch 1, **dadurch gekennzeichnet, dass** das Verbindungselement (13) beispielsweise ein Gewindezapfen und eine Führung ist.

3. Entgratwerkzeug nach Anspruch 1, **dadurch gekennzeichnet, dass** das Schaftstück (11) mit dem Werkzeugschaft (1) durch mehrere Spannstifte (16) verbunden ist.

4. Entgratwerkzeug nach Anspruch 1, **dadurch gekennzeichnet, dass** das Schaftstück (11) mit dem Werkzeugschaft (1) durch mehrere am Umfang des Schaftstückes (11) um 60 Grad versetzte Gewindestifte (16) verbunden ist.

5. Entgratwerkzeug nach Anspruch 1, **dadurch gekennzeichnet, dass** mindestens zwei Innenspanngewindestifte (29) quer zur Längsachse (4) durch das Schaftstück (11) und durch den Werkzeugschaft (1) bis oder in die Durchgangsbohrung (12) geführt sind.

6. Entgratwerkzeug nach Anspruch 5, **dadurch gekennzeichnet, dass** die Innenspanngewindestifte (29) in radialer und/oder axialer Richtung Bohrungen (28;30) haben.

7. Entgratwerkzeug nach Anspruch 5 und 6, **dadurch gekennzeichnet, dass** die Innenspanngewindestifte (29) am schaftstückseitigen Ende (31) beispielsweise einen Innensechskant (32) und am durchgangsbohrungsseitigen Ende mindestens eine Querbohrung (30) aufweisen.

8. Entgratwerkzeug nach Anspruch 5 bis 7, **dadurch gekennzeichnet, dass** das schaftstückseitige Ende (31) in der Länge kleiner als die Wandstärke a des Schaftstückes (11) und im Durchmesser kleiner als der Außendurchmesser des Innenspanngewindestiftes (29) ist.

9. Entgratwerkzeug nach Anspruch 5 bis 8, **dadurch gekennzeichnet, dass** der Übergang vom schaftstückseitigen Ende (31) zum Außendurchmesser des Innenspanngewindestiftes (29) kugelig oder kegelförmig ist.

10. Entgratwerkzeug nach Anspruch 1, **dadurch gekennzeichnet, dass** das Einspannende (2) des Werkzeugschaftes (1) am maschinenseitigen Ende einen Anschluss (14) zur Stoffzuführung und einen Adapter (20) zur Schaftverlängerung hat.

11. Entgratwerkzeug nach Anspruch 1, **dadurch gekennzeichnet, dass** die das Schaftstück (11) abschließende Stirnseite mit mehreren Nuten versehen einen Vorentgrater (9) bildet.

12. Entgratwerkzeug nach Anspruch 11, **dadurch gekennzeichnet, dass** der Vorentgrater (9) ein mit einer oder mehreren Nuten versehendes Verschlussplättchen (17) ist.

13. Entgratwerkzeug nach Anspruch 11, **dadurch gekennzeichnet, dass** der Vorentgrater (9) eine hohle Schraube mit Schlitzen ist.

14. Entgratwerkzeug nach Anspruch 1 bis 13, **dadurch gekennzeichnet, dass** in der Stirnseite des Schaftstückes (11) eine Blende (28) in Form einer Durchgangsbohrung angeordnet ist.

15. Entgratwerkzeug nach Anspruch 1 bis 14, **dadurch gekennzeichnet, dass** die aufliegende Oberfläche des Schneidenkörpers (21) und des Stützkörpers (6) rechteckig, dreieckig, zylindrisch oder prismatisch ist und die Flächen zur Längsachse (4) des Werkzeugschaftes (1) sowohl parallel als auch nicht parallel angeordnet sind.

16. Entgratwerkzeug nach Anspruch 1 bis 15, **dadurch gekennzeichnet, dass** der Schneidenkörper (21) ein Schneidenmittelstück (7) mit einer Schneide (3), eine radiale, seitliche Schneidenwegbegrenzung (18) bzw. eine radiale, stirnseitige Schneidenwegbegrenzung (19) oder eine zylindrische Schneidenwegbegrenzung (27) hat.

17. Entgratwerkzeug nach Anspruch 1 bis 16, **dadurch gekennzeichnet, dass** die doppelte Länge L2 der Auskragung des Schneidenkörpers (21) zum Stützkörper (6) kleiner bzw. gleich der Länge L1 des Schneidenkörpers (21) ist.

18. Entgratwerkzeug nach Anspruch 1 bis 17, **dadurch gekennzeichnet, dass** die Schneide (3) eine Schneidenhöhe c und eine Schneidenbreite b kleiner 0,5 mm hat.

19. Entgratwerkzeug nach Anspruche 1 bis 18, **dadurch gekennzeichnet, dass** die Stärke d des Schneidenkörpers (21) größer als die Schneidenhöhe c ist.

20. Entgratwerkzeug nach Anspruch 1 bis 19, **dadurch gekennzeichnet, dass** die Stärke d des Schneidenkörpers (21) kleiner als die Wandstärke a des rohrförmigen Schaftstückes (11) ist.

21. Entgratwerkzeug nach Anspruch 1 bis 20, **dadurch gekennzeichnet, dass** die Schneide (3) eine Schulter (23) und eine mit unterschiedlicher Tiefe C1 ausgeführte Aussparung (22) aufweist.

22. Entgratwerkzeug nach Anspruch 1 bis 21, **dadurch gekennzeichnet, dass** die Schulterhöhe 24 kleiner oder gleich der Schneidenhöhe c ist.

23. Entgratwerkzeug nach Anspruch 1 bis 22, **dadurch gekennzeichnet, dass** bei zu entgratenden Querbohrungen mit einem Durchmesser von kleiner 2 mm der Schulterwinkel δ 5 bis 45 Grad beträgt.

24. Entgratwerkzeug nach Anspruch 1 bis 22, **dadurch gekennzeichnet, dass** bei zu entgratenden Querbohrungen mit einem größeren Durchmesser der Schulterwinkel δ größer 45 Grad ist.

25. Entgratwerkzeug nach Anspruch 1 bis 24, **dadurch gekennzeichnet, dass** die Schneide (3) an den im Eingriff stehenden Stoßkanten einen Freiwinkel α von Null Grad hat.

26. Entgratwerkzeug nach Anspruch 1 bis 25, **dadurch gekennzeichnet, dass** der Freiwinkel α durch die Flächen F1, F2, F3 der Schneide (3) festgelegt ist.

27. Entgratwerkzeug nach Anspruch 1 bis 26, **dadurch gekennzeichnet, dass** der Kippwinkel γ der Schneide (3) größer als Null Grad ist.

28. Entgratwerkzeug nach Anspruch 1 bis 27, **dadurch gekennzeichnet, dass** der Druck p nach den sich während der Bearbeitung ändernden Gratabmessungen einstellbar ist.

29. Entgratwerkzeug nach Anspruch 1 bis 28, **dadurch gekennzeichnet, dass** der Druck p in Abhängigkeit vom Werkstoff einstellbar ist.

30. Entgratwerkzeug nach Anspruch 1 bis 29, **dadurch gekennzeichnet, dass** die Einstellung des Druckes p von einem graterfassenden Messmittel bestimmt ist.

31. Entgratwerkzeug nach Anspruch 1 bis 30, **dadurch gekennzeichnet, dass** der Druck p an der Schneidenkörperfläche größer als der Atmosphärendruck und kleiner 500 bar, vorzugsweise zwischen 4 bis 60 bar, ist.

32. Entgratwerkzeug nach Anspruch 1 bis 31, **dadurch gekennzeichnet, dass** die Durchgangsbohrung (12) zentrisch in der Längsachse (4) im Werkzeugschaft (1) bis zum Ende des Stützkörpers (6) angeordnet ist.

33. Entgratwerkzeug nach Anspruch 1 bis 32, **dadurch gekennzeichnet, dass** die Durchgangsbohrung (12) im Werkzeugschaft (1) eine Grundlochbohrung mit radialer Abführung ist.

34. Entgratwerkzeug nach Anspruch 1 bis 31, **dadurch gekennzeichnet, dass** die Durchgangsbohrung (12) zentrisch in der Längsachse (4) im Werkzeugschaft (1) bis zur Hälfte des Stützkörpers (6) angeordnet ist und von diesem Ende der Durchgangsbohrung (12) im Stützkörper (6) Bohrungen (26) direkt in die Richtung der Schneiden (3) führen.

35. Entgratwerkzeug nach Anspruch 1 bis 34, **dadurch gekennzeichnet, dass** der in die Durchgangsbohrung (12) des Werkzeugschaftes (1) gepresste flüssige Stoff eine Bohremulsion, ein Bohröl oder ein Gemisch oder ein anderer zur Kühlung und/oder Schmierung einsetzbarer Stoff ist.

36. Entgratwerkzeug nach Anspruch 1 bis 34, **dadurch gekennzeichnet, dass** der in die Durchgangsbohrung (12) des Werkzeugschaftes (1) gepresste gasförmige Stoff ein Schweißgas, ein Inertgas, Druckluft oder Kohlendioxid ist.

37. Entgratwerkzeug nach Anspruch 1 bis 34, **dadurch gekennzeichnet, dass** das in die Durchgangsbohrung (12) des Werkzeugschaftes (1) gepresste Gas-Flüssigkeits-Gemisch beispielsweise Luft mit einem 10 bis 15 prozentigen Anteil eines zugemischten Bohröles ist.

38. Entgratwerkzeug nach Anspruch 1 bis 37, **dadurch gekennzeichnet, dass** die Querbohrungen beim Vorschub des Entgratwerkzeuges im Rechtslauf und beim Rücklauf im Linkslauf zu entgraten sind.

39. Entgratwerkzeug nach Anspruch 1, **dadurch gekennzeichnet, dass** das rohrförmige Schaftstück (11) durch einen quer zur Längsachse (4) durch die Durchgangsbohrung (12) angeordneten Innenspanngewindestift (29), dessen Kerndurchmesser D1 kleiner als der Durchmesser D3 der Durchgangsbohrung (12) ist und dessen Durchmesser D gleich dem Durchmesser D3 der Durchgangsbohrung (12) entspricht, mit dem Werkzeugschaft (1) verbunden ist.

40. Entgratwerkzeug nach Anspruch 39, **dadurch gekennzeichnet, dass** der Innenspanngewindestift (29) im Bereich der Durchgangsbohrung (12) eine Nut (33) hat.

41. Entgratwerkzeug nach Anspruch 39, **dadurch gekennzeichnet, dass** das schaftstückseitige Ende (31) des Innenspanngewindestiftes (29) kegelförmig mit einem Winkel α von < 10 Grad ausgeführt ist.

42. Entgratwerkzeug nach Anspruch 1 bis 41, **dadurch gekennzeichnet, dass** mindestens zwei eng nebeneinander liegende Durchbrüche (10) radialsymmetrisch und in axialer Richtung um einen Betrag m versetzt im rohrförmigen Schaftstück (11) angeordnet sind.

43. Entgratwerkzeug nach Anspruch 42, **dadurch gekennzeichnet, dass** die Durchbrüche (10) im rohrförmigen Schaftstück (11) asymmetrisch angeordnet sind.

44. Entgratwerkzeug nach Anspruch 42 und 43, **dadurch gekennzeichnet, dass** der Betrag m kleiner als der Vorschub pro Schneide ist.

45. Verfahren zum spanenden Außenentgraten von Werkstücken, wie von Zahn- und Kettenrädern mit einem Entgratwerkzeug nach Anspruch 1 bis 41, **dadurch gekennzeichnet, dass** das Entgratwerkzeug (36) nach einer zum Werkstück erfolgten Zustellbewegung mit einem Druck von > 3 bar radial und axial gesteuert der zu bearbeitenden Form des Werkstücks und/oder linear zum Werkstück mit einem Vorschub nachgeführt wird und gleichzeitig das Werkstück mit einer Drehzahl von > 100 U/min im Rechts- und/oder Linkslauf bewegt wird.

46. Verfahren zum spanenden Außenentgraten nach Anspruch 45 **dadurch gekennzeichnet, dass** der Vorschub je Umdrehung des Werkstückes 0,01 bis 0,3 mm, vorzugsweise 0,05 bis 0,2 mm beträgt.

47. Verfahren zum spanenden Außenentgraten nach Anspruch 45 und 46, **dadurch gekennzeichnet, dass** gleichzeitig mehrere Entgratwerkzeuge eingesetzt werden.

## Claims

1. A deburring tool for deburring the interior and/or exterior of workpieces such as the abutting edges on intersecting bores or on longitudinal and transverse grooves in bores or on transverse bores in a deep-hole bore with different diameters in an engine block, and the surfaces of a cog and sprocket assembly. When used, the deburring tool is moved in a rotary and/or translatory fashion. It comprises a tool shaft (1) with a clamping end (2) and an end (5) with an internal support made from an elastomer material (6), which supports at least one supporting surface of a floating cutting tool (21) in the opening (10) with a cutting edge (3) and which radially impinges on the cutting edge (3) with spring force, wherein:
- the support (6) is mounted on the tool-side shaft end (5) as a fixed bearing;
- a tubular shaft section (11), which is attached by one or more connecting elements (13) to the tool shaft (1), holds the floating cutting tool (21) borne in the opening (10) which lies loosely with some clearance (8) on the surface of the support (6), the shape and dimensions of which are always geometrically different from the surface of the cutting tool (21);
- a liquid or gaseous substance or a gas-liquid mixture forced under pressure into a through-hole (12) of the tool shaft (1) causes the cutting edge (3) to move outwards.

2. A deburring tool according to claim 1, wherein the connecting element (13) comprises for example a threaded stem and guide.

3. A deburring tool according to claim 1, wherein the shaft section (11) is connected to the tool shaft (1) by a number of dowel pins (16).

4. A deburring tool according to claim 1, wherein the shaft section (11) is connected to the tool shaft (1) by a number of setscrews (16) offset by 60° on the circumference of the shaft section (11).

5. A deburring tool according to claim 1, wherein at least two internal setscrews (29) at right angles to the longitudinal axis (4) extend through the shaft section (11) and the tool shaft (1) up to or into the through-hole (12).

6. A deburring tool according to claim 5, wherein the internal setscrews (29) contain radial and/or axial boreholes (28; 30).

7. A deburring tool according to claims 5 and 6, wherein the internal setscrews (29) include for example a hexagonal socket (32) on the end (31) on the shaft section side and at least one cross hole (30) on the end on the through-hole side.

8. A deburring tool according to claims 5-7, wherein the end (31) of the internal setscrew (29) on the shaft section side is shorter than wall thickness a) of the shaft section (11) and its diameter is smaller than the outside diameter of the internal setscrew (29).

9. A deburring tool according to claims 5-8, wherein the transition from the end (31) on the shaft section side to the outside diameter of the internal setscrew (29) is spherical or conical.

10. A deburring tool according to claim 1, wherein the clamping end (2) of the tool shaft (1) on the machine side includes on the end a fluid supply connection (14) and an adapter (20) to extend the shaft.

11. A deburring tool according to claim 1, wherein the face at the end of the shaft section (11) is provided with several grooves and forms a pre-deburring tool (9).

12. A deburring tool according to claim 11, wherein the pre-deburring tool (9) comprises a small sealing plate (17) provided with one or more grooves.

13. A deburring tool according to claim 11, wherein the pre-deburring tool (9) comprises a hollow screw with slots.

14. A deburring tool according to claims 1-13, wherein an aperture (28) in the form of a through-hole is contained in the end face of the shaft section (11).

15. A deburring tool according to claims 1-14, wherein the adjacent surface of the cutting tool (21) and that of the support (6) are rectangular, triangular, cylindrical or prismatic and the surfaces are arranged parallel as well as non-parallel to the longitudinal axis (4) of the tool shaft (1).

16. A deburring tool according to claims 1-15, wherein the cutting tool (21) comprises a blade centre section (7) with a cutting edge (3), a radial, lateral limit stop (18) for the cutting edge, a radial limit stop (19) for the cutting edge on the face, or a cylindrical limit stop (27) for the cutting edge travel.

17. A deburring tool according to claims 1-16, wherein twice the length L2 of the projection of the cutting tool (21) to the support (6) is shorter than or equal to the length L1 of the cutting tool (21).

18. A deburring tool according to claims 1-17, wherein the cutting edge (3) has a height c and a width b of less than 0.5mm.

19. A deburring tool according to claims 1-18, wherein the thickness d of the cutting tool (21) exceeds the height c of the cutting edge.

20. A deburring tool according to claims 1-19, wherein the thickness d of the cutting tool (21) is smaller than the wall thickness a of the tubular shaft section (11).

21. A deburring tool according to claims 1-20, wherein the cutting edge (3) includes a shoulder (23) and a recess (22) of varying depth.

22. A deburring tool according to claims 1-21, wherein the shoulder height (24) is smaller than or equal to the height c of the cutting edge.

23. A deburring tool according to claims 1-22, wherein the shoulder angle δ is 5-45° for deburring cross holes with a diameter of less than 2 mm.

24. A deburring tool according to claims 1-22, wherein the shoulder angle δ is greater than 45° for deburring cross holes with a larger diameter.

25. A deburring tool according to claims 1-24, wherein the cutting edge (3) has a clearance angle α of 0° on the abutting edges in the engagement area.

26. A deburring tool according to claims 1-25, wherein the clearance angle α is fixed by surfaces F1, F2 and F3 of the cutting edge (3).

27. A deburring tool according to claims 1-26, wherein the tilting angle γ of the cutting edge (3) is greater than 0°.

28. A deburring tool according to claims 1-27, wherein the pressure p is adjustable depending on the varying burr dimensions during machining.

29. A deburring tool according to claims 1-28, wherein the pressure p is adjustable depending on the material.

30. A deburring tool according to claims 1-29, wherein the pressure setting p is determined by a burr-measuring device.

31. A deburring tool according to claims 1-30, wherein the pressure p on the cutting tool surface is higher than atmospheric pressure and lower than 500 bar, preferably in the range of 4-60 bar.

32. A deburring tool according to claims 1-31, wherein the through-hole (12) is centrally positioned in the longitudinal axis (4) in the tool shaft (1) up to the end of the support (6).

33. A deburring tool according to claims 1-32, wherein the through-hole (12) in the tool shaft (1) comprises a blind-hole bore with a radial outlet.

34. A deburring tool according to claims 1-31, wherein the through-hole (12) is centrally positioned in the longitudinal axis (4) in the tool shaft (1) up to half of the support (6) with boreholes (26) directly leading towards the cutting edges (3) from this end of the through-hole (12).

35. A deburring tool according to claims 1-34, wherein the liquid forced into the through-hole (12) of the tool shaft (1) is a drilling emulsion, a drilling oil, a mixture or another substance suitable for cooling and/or lubricating.

36. A deburring tool according to claims 1-34, wherein the gas forced into the through-hole (12) of the tool shaft (1) is a welding gas, an inert gas, compressed air or carbon dioxide.

37. A deburring tool according to claims 1-34, wherein the liquid/gas mixture forced into the through-hole (12) of the tool shaft (1) comprises air containing about 10-15% admixed drilling oil.

38. A deburring tool according to claims 1-37, wherein cross holes are deburred clockwise when the deburring tool is advanced and anticlockwise when the deburring tool is retracted.

39. A deburring tool according to claim 1, wherein the tubular shaft section (11) is connected to the tool shaft (1) by an internal setscrew (29) extending through the through-hole (12) at right angles to the longitudinal axis (4), the core diameter D1 of the internal setscrew being smaller than the diameter D3 of the through-hole (12) and its diameter D being equal to the diameter D3 of the through-hole (12).

40. A deburring tool according to claim 39, wherein the internal setscrew (29) contains a groove (33) in the area of the through-hole (12).

41. A deburring tool according to claim 39, wherein the end (31) of the internal setscrew (29) on the shaft section side is conical with an angle α of <10°.

42. A deburring tool according to claims 1-41, wherein at least two openings (10) closely adjacent to each other are positioned in the tubular shaft section (11) in a radially symmetrical manner and offset in the axial direction by a distance m.

43. A deburring tool according to claim 42, wherein the openings (10) are arranged asymmetrically in the tubular shaft section (11).

44. A deburring tool according to claims 42 and 43, wherein the distance m is smaller than the advance of each cutting edge.

45. Method for deburring the exteriors of workpieces such as cogs and sprocket wheels with a deburring tool according to claims 1-41, wherein, after having been advanced towards the workpiece with a pressure > 3 bar, the deburring tool (36) is guided radially and axially in accordance with the shape of the workpiece being machined and/or linearly advanced towards the workpiece, which is simultaneously rotated clockwise and/or anticlockwise at a speed > 100 rpm.

46. Method for deburring exteriors according to claim 45, wherein the advance per revolution of the workpiece is between 0.01mm and 0.3mm, preferably between 0.05mm and 0.2mm.

47. Method for deburring exteriors according to claims 45 and 46, wherein a number of deburring tools can be used simultaneously.

## Revendications

1. Outil d'ébavurage destiné à l'ébavurage intérieur et/ou extérieur de pièces telles que des rebords sur des alésages qui se croisent, sur des rainures longitudinales et transversales d'alésages, ou sur des alésages transversaux d'un alésage profond de diamètres différents dans un bloc moteur ou sur des surfaces d'une roue dentée ou d'un pignon à chaîne animés d'un mouvement rotatif ou translatoire en exploitation, comportant un manchon porte-outil (1) qui dispose d'une extrémité de serrage (2) et d'une extrémité (5) comportant un corps d'appui (6) intérieur et composé d'un matériau élastomère, qui appuie d'une lame (3) au moins une surface de contact d'un élément de coupe (21) disposé de façon mobile dans un passage (10) et qui applique la force d'un ressort dans le sens radial sur la lame (3), **caractérisé en ce que**
- le corps d'appui (6) est disposé sur l'extrémité côté outil du manchon (5) sous forme d'un logement fixe,
- un élément manchon tubulaire (11), qui est relié au manchon porte-outil (1) moyennant un ou plusieurs éléments de liaison (13), porte l'élément de coupe (21) logé de façon mobile dans le passage (10) et s'appuyant légèrement avec un jeu (8) sur la surface du corps d'appui (6), dont la forme et les dimensions sont toujours géométriquement différentes de la surface de l'élément de coupe (21), et
- une matière liquide ou gazeuse ou se composant d'un mélange gaz/liquide qui est introduite par pression dans un trou débouchant (12) du manchon porte-outil (1), ainsi provoquant le mouvement de la lame (3) vers l'extérieur.

2. Outil d'ébavurage selon la revendication 1, **caractérisé en ce que** l'élément de liaison (13) est, par exemple, une tige filetée et un élément de guidage.

3. Outil d'ébavurage selon la revendication 1, **caractérisé en ce que** le l'élément manchon (11) est relié au manchon porte-outil (1) par plusieurs tiges de serrage (16).

4. Outil d'ébavurage selon la revendication 1, **caractérisé en ce que** l'élément manchon (11) est relié au manchon porte-outil (1) par plusieurs tiges filetées (16) qui sont disposées avec un angle de décalage de 60 degrés sur la circonférence de l'élément manchon (11).

5. Outil d'ébavurage selon la revendication 1, **caractérisé en ce qu'**au moins deux tiges filetées intérieures de serrage (29) sont disposées perpendiculairement à l'axe longitudinal (4) à travers l'élément manchon (11) et le manchon porte-outil (1) pour aller jusqu'au trou débouchant (12) ou y entrer.

6. Outil d'ébavurage selon la revendication 5, **caractérisé en ce que** les tiges filetées intérieures de serrage (29) sont dotées d'alésages (28;30) dans le sens radial et/ou axial.

7. Outil d'ébavurage selon les revendications 5 et 6, **caractérisé en ce que** les tiges filetées intérieures de serrage (29) sont dotées sur l'extrémité de l'élément manchon (31) de, par exemple, un six pans creux (32) et sur l'extrémité du trou débouchant d'au moins un alésage transversal (30).

8. Outil d'ébavurage selon les revendications 5 à 7, **caractérisé en ce que** la longueur de l'extrémité de l'élément manchon (31) est inférieure à l'épaisseur de paroi a de l'élément manchon (11) et que son diamètre est inférieur au diamètre extérieur de la tige filetée intérieure de serrage (29) .

9. Outil d'ébavurage selon les revendications 5 à 8, **caractérisé en ce que** le passage de l'extrémité de l'élément manchon (31) au diamètre extérieur de la tige filetée intérieure de serrage (29) a une forme sphérique ou conique.

10. Outil d'ébavurage selon la revendication 1, **caractérisé en ce que** l'extrémité de serrage (2) du manchon porte-outil (1) est dotée, du côté machine, d'un raccord (14) pour l'alimentation en matière et d'un adaptateur (20) permettant de rallonger le manchon.

11. Outil d'ébavurage selon la revendication 1, **caractérisé en ce que** la face extérieure sur laquelle se termine l'élément manchon (11) est dotée de plusieurs rainures formant un pré-ébavureur (9).

12. Outil d'ébavurage selon la revendication 11, **caractérisé en ce que** le pré-ébavureur (9) est une plaquette de fermeture (17) dotée d'une ou de plusieurs rainures.

13. Outil d'ébavurage selon la revendication 11, **caractérisé en ce que** le pré-ébavureur (9) est une vis creuse dotée de fentes.

14. Outil d'ébavurage selon les revendications 1 à 13, **caractérisé en ce que** dans la face d'extrémité de l'élément manchon (11) est aménagé un diaphragme (28) sous forme d'un trou débouchant.

15. Outil d'ébavurage selon les revendications 1 à 14, **caractérisé en ce que** la surface reposante de l'élément de coupe (21) et du corps d'appui (6) est rectangulaire, triangulaire, cylindrique ou prismatique et que les surfaces sont disposées parallèlement ou non parallèlement par rapport à l'axe longitudinal (4) du manchon porte-outil (1).

16. Outil d'ébavurage selon les revendications 1 à 15, **caractérisé en ce que** l'élément de coupe (21) se compose d'un élément central (7) avec une lame (3), d'un dispositif limiteur latéral du trajet de coupe dans le sens radial (18) ou bien d'un dispositif limiteur frontal du trajet de coupe dans le sens radial (19) ou d'un dispositif limiteur cylindrique (27).

17. Outil d'ébavurage selon les revendications 1 à 16, **caractérisé en ce que** la double longueur L2 de l'affleurement de l'élément de coupe (21) vers le corps d'appui (6) est inférieure ou bien égale à la longueur L1 de l'élément de coupe (21).

18. Outil d'ébavurage selon les revendications 1 à 17, **caractérisé en ce que** la lame (3) a une hauteur c et une largeur b inférieure à 0,5 mm.

19. Outil d'ébavurage selon les revendications 1 à 18, **caractérisé en ce que** l'épaisseur d de l'élément de coupe (21) est supérieure à la hauteur de lame c.

20. Outil d'ébavurage selon les revendications 1 à 19, **caractérisé en ce que** l'épaisseur d de l'élément de coupe (21) est inférieure à l'épaisseur de paroi a de l'élément manchon tubulaire (11).

21. Outil d'ébavurage selon les revendications 1 à 20, **caractérisé en ce que** la lame (3) est pourvue d'un talon (23) et d'une découpe (22) de profondeur variable.

22. Outil d'ébavurage selon les revendications 1 à 21, **caractérisé en ce que** la hauteur du talon (24) est inférieure ou égale à la hauteur de lame c.

23. Outil d'ébavurage selon les revendications 1 à 22, **caractérisé en ce que** pour les alésages transversaux à ébavurer ayant un diamètre inférieur à 2 mm, l'angle du talon δ s'élève à 5 à 45 degrés.

24. Outil d'ébavurage selon les revendications 1 à 22, **caractérisé en ce que** pour les alésages transversaux à ébavurer ayant un diamètre plus élevé, l'angle du talon δ est supérieur à 45 degrés.

25. Outil d'ébavurage selon les revendications 1 à 24, **caractérisé en ce que** la lame (3) a un angle de dépouille α de zéro degré au niveau des rebords qui s'engrènent les uns sur les autres.

26. Outil d'ébavurage selon les revendications 1 à 25, **caractérisé en ce que** l'angle de dépouille α est déterminé par les surfaces F1, F2, F3 de la lame (3).

27. Outil d'ébavurage selon les revendications 1 à 26, **caractérisé en ce que** l'angle de coupe γ de la lame (3) est supérieure à zéro degré.

28. Outil d'ébavurage selon les revendications 1 à 27, **caractérisé en ce que** la pression p est réglable en fonction des dimensions des bavures qui varient durant l'usinage.

29. Outil d'ébavurage selon les revendications 1 à 28, **caractérisé en ce que** la pression p est réglable en fonction du matériau.

30. Outil d'ébavurage selon les revendications 1 à 29, **caractérisé en ce que** le réglage de la pression p est déterminé par un instrument de mesure enregistrant le degré de bavurage.

31. Outil d'ébavurage selon les revendications 1 à 30, **caractérisé en ce que** la pression p au niveau de la surface de l'élément de coupe est supérieure à la pression atmosphérique et inférieure à 500 bars, se situant de préférence entre 4 et 60 bars.

32. Outil d'ébavurage selon les revendications 1 à 31, **caractérisé en ce que** le trou débouchant (12) est disposé de façon centrée dans l'axe longitudinal (4) du manchon porte-outil (1) jusqu'à la fin du corps d'appui (6).

33. Outil d'ébavurage selon les revendications 1 à 32, **caractérisé en ce que** le trou débouchant (12) au manchon porte-outil (1) est un trou borgne avec évacuation radiale.

34. Outil d'ébavurage selon les revendications 1 à 31, **caractérisé en ce que** le trou débouchant (12) est disposé de façon centrée dans l'axe longitudinal (4) du manchon porte-outil (1) couvrant la moitié du corps d'appui (6) et que des trous (26) aménagés dans le corps d'appui (6) partent de cette partie du trou débouchant (12) directement en direction des lames (3).

35. Outil d'ébavurage selon les revendications 1 à 34, **caractérisé en ce que** la matière liquide pressée dans le trou débouchant (12) du manchon porte-outil (1) est une émulsion de perçage, une huile de perçage ou un mélange ou un autre produit utilisable pour le refroidissement et/ou la lubrification.

36. Outil d'ébavurage selon les revendications 1 à 34, **caractérisé en ce que** la matière gazeuse pressée dans le trou débouchant (12) du manchon porte-outil (1) est un gaz de soudage, un gaz inerte, de l'air comprimé ou du dioxyde de carbone.

37. Outil d'ébavurage selon les revendications 1 à 34, **caractérisé en ce que** le mélange gaz/liquide pressé dans le trou débouchant (12) du manchon porte-outil (1) est, par exemple, de l'air contenant un taux de 10 bis 15 pourcent d'une huile de perçage ajoutée.

38. Outil d'ébavurage selon les revendications 1 bis 37, **caractérisé en ce que** les trous transversaux sont à ébavurer lors du mouvement d'avance de l'outil d'ébavurage en marche à droite et de son mouvement de retour en marche à gauche.

39. Outil d'ébavurage selon la revendication 1, **caractérisé en ce que** l'élément manchon tubulaire (11) est relié au manchon porte-outil (1) moyennant une tige filetée intérieure de serrage (29) disposée perpendiculairement à l'axe longitudinal (4) et traversant le trou débouchant (12), dont le diamètre du noyau D1 est inférieur au diamètre D3 du trou débouchant (12) et dont le diamètre D est identique au diamètre D3 du trou débouchant (12).

40. Outil d'ébavurage selon la revendication 39, **caractérisé en ce que** la tige filetée intérieure de serrage (29) est dotée d'une rainure (33) dans la zone du trou débouchant (12).

41. Outil d'ébavurage selon la revendication 39, **caractérisé en ce que** l'extrémité du côté élément manchon (31) de la tige filetée intérieure de serrage (29) est conçue de façon conique avec un angle α inférieur à 10 degrés.

42. Outil d'ébavurage selon les revendications 1 à 41, **caractérisé en ce que** l'élément manchon tubulaire (11) est doté d'au moins deux passages (10) radiaux symétriques disposés à proximité l'un de l'autre (10) et décalés dans le sens axial d'une distance m.

43. Outil d'ébavurage selon la revendication 42, **caractérisé en ce que** les passages (10) dans l'élément manchon tubulaire (11) sont disposés de façon asymétrique.

44. Outil d'ébavurage selon les revendications 42 et 43, **caractérisé en ce que** la valeur m est inférieure à l'avance par lame.

45. Procédé d'ébavurage extérieur abrasif de pièces, telles que roues dentées et pignons à chaîne, au moyen d'un outil d'ébavurage selon les revendications 1 à 41, **caractérisé en ce que** l'outil d'ébavurage (36) est déplacé, grâce à un système de commande radiale et axiale, par un mouvement d'avance en fonction de la forme à usiner de la pièce et/ou linéairement par rapport à la pièce sous une pression supérieure à 3 bars et que la pièce tourne simultanément avec une vitesse supérieure à 100 tr/min en marche à droite et/ou à gauche.

46. Procédé d'ébavurage extérieur abrasif selon la revendication 45, **caractérisé en ce que** l'avance par tour de rotation de la pièce est de 0,01 à 0,3 mm, de préférence 0,05 à 0,2 mm.

47. Procédé d'ébavurage extérieur abrasif selon les revendications 45 et 46, **caractérisé en ce que** plusieurs outils d'ébavurage sont utilisés simultanément.
